# EUROPÄISCHE PATENTSCHRIFT

(11) **EP 1 189 486 B1**
(45) Veröffentlichungstag und Bekanntmachung des Hinweises auf die Patenterteilung: **11.02.2004**
(21) Anmeldenummer: 01122011.8
(22) Anmeldetag: 13.09.2001
(51) Int. Cl.: H05B 41/295

(54) **Elektronisches Vorschaltgerät**
Electronic Ballast
Ballast électronique

(30) Priorität: 15.09.2000 DE 10045711
(43) Veröffentlichungstag der Anmeldung: 20.03.2002
(73) Patentinhaber: TridonicAtco GmbH & Co. KG, 6851 Dornbirn (AT)
(72) Erfinder: Zundrell-Koch, Stefan, Dipl.-Ing. (NTB), 6850 Dornbirn (AT)
(74) Vertreter: Schmidt-Evers, Jürgen, Dipl.-Ing.

(56) Entgegenhaltungen:
- DE-A- 19 850 441
- US-A- 6 040 661

## Beschreibung

Die vorliegende Erfindung betrifft ein elektronisches Vorschaltgerät nach dem Oberbegriff des Anspruches 1.

Aus der Patentschrift US 6,040,661 ist ein Vorschaltgerät in etwa gemäß Oberbegriff des Anspruchs 1, aber ohne Heiztransformator bekannt.

Der Einsatz elektronischer Vorschaltgeräte zum Betreiben von Gasentladungslampen ist gegenüber der Verwendung von konventionellen Vorschaltgeräten mit einem höheren Investitionsaufwand verbunden, führt allerdings aufgrund von reduzierten Vorschaltgeräteverlusten sowie einem verbesserten Lampenwirkungsgrad zu deutlichen Energieeinsparungen. Den Eingang eines typischen elektronischen Vorschaltgerätes bildet ein an das Spannungsversorgungsnetz angeschlossenes Hochfrequenzfilter, welches mit einer Gleichrichterschaltung verbunden ist. Die von der Gleichrichterschaltung gleichgerichtete Versorgungsspannung wird einer Glättungsschaltung zum Erzeugen einer Zwischenkreisspannung zugeführt. Ein mit der Zwischenkreisspannung gespeister Wechselrichter erzeugt schließlich eine hochfrequente Wechselspannung, welche an den Lastkreis mit der daran angeordneten Gasentladungslampe angelegt wird. Das Betreiben mit der hochfrequenten Wechselspannung hat eine Verringerung der Elektrodenverluste sowie eine Steigerung der Lichtausbeute in der positiven Säule der Gasentladungslampe zur Folge. Durch eine Änderung der Frequenz ist darüber hinaus die Möglichkeit gegeben, die Lampe in unterschiedlichen Helligkeitsstufen zu betreiben.

Ferner ist es in der Regel erwünscht, die Elektroden einer Gasentladungslampe vor der Zündung vorzuheizen, da die Lampe in diesem Fall während der Zündung einer geringeren Belastung ausgesetzt wird und somit ihre Lebensdauer deutlich erhöht werden kann. Zu diesem Zweck weisen die Lastkreise der Vorschaltgeräte in der Regel einen Heiztransformator mit zwei oder mehreren Heizwicklungen für die Elektroden der Lampe auf. Noch vor einer Zündung der Lampe wird den Heizkreisen ein Strom zugeführt, der eine entsprechende Erwärmung der Lampenelektroden bewirkt.

Um eine optimale Vorheizung der Lampenelektroden zu gewährleisten, ist der verwendete Heizstrom an den jeweiligen Lampentyp anzupassen. Aus diesem Grund war es bislang erforderlich, für unterschiedliche Lampentypen unterschiedliche Heiztransformatoren zu verwenden, denn nur hierdurch war gewährleistet, daß die von den einzelnen Lampentypen benötigten Vorheizspannungen tatsächlich erreicht wurden. Die Vorheizspannung ergibt sich dabei durch die von dem Wechselrichter an den Lastkreis angelegte Wechselspannung sowie das Übersetzungsverhältnis des Transformators. Die Verwendung eines speziellen Heiztransformators für jeden einzelnen Lampentyp hat jedoch zur Folge, daß ein Vorschaltgerät mit einem bestimmten Heiztransformator auch wirklich nur für diesen einen Lampentyp geeignet ist.

Es ist Aufgabe der vorliegenden Erfindung, ein elektronisches Vorschaltgerät zum Betreiben einer Gasentladungslampe anzugeben, welches die Möglichkeit des Vorheizens der Lampenelektroden vor der Zündung eröffnet, dabei allerdings für mehrere unterschiedliche Lampentypen geeignet ist.

Die Aufgabe wird durch ein elektronisches Vorschaltgerät, welches die Merkmale des Anspruchs 1 aufweist, gelöst. Das erfindungsgemäße Vorschaltgerät weist zunächst eine an eine Wechselspannungsquelle anschließbare Gleichrichterschaltung sowie eine an den Ausgang der Gleichrichterschaltung angeschlossene Glättungsschaltung zum Erzeugen einer Zwischenkreisspannung auf. Darüber hinaus enthält das Vorschaltgerät einen mit der Zwischenkreisspannung gespeisten Wechselrichter, an dessen Ausgang ein die Lampe enthaltender Lastkreis angeschlossen ist, wobei der Lastkreis einen Heiztransformator mit Heizwicklungen für die Elektroden der Lampe aufweist.

Erfindungsgemäß enthält die Glättungsschaltung einen Zwischenkreisspannungs-Regler, der in einer Vorheizphase vor der Zündung der Lampe die Zwischenkreisspannung auf einen vorgebenen Spannungssollwert regelt, der dem in dem Lastkreis angeordneten Lampentyp entspricht. Bei dem erfindungsgemäßen Vorschaltgerät wird somit die Bereitstellung der von dem zu betreibenden Lampentyp benötigten Vorheizspannung nicht durch die Wahl eines entsprechend ausgelegten Vorheiztransformators gewährleistet, sondern dadurch, daß die Zwischenkreisspannung auf einen bestimmten Sollwert geregelt wird, infolgedessen sich in den Heizkreisen der benötigte Vorheizspannungswert ergibt. Dabei wird der Umstand ausgenützt, daß es sich bei dem Lastkreis mit den beiden darin angeordneten Heizkreisen zum Beheizen der Lampenelektroden um ein in erster Näherung lineares, zumindest jedoch sich monoton verhaltenes Netzwerk handelt, d.h., daß die während der Vorheizphase an den Lampenelektroden anliegende Vorheizspannung mit einer steigenden Zwischenkreisspannung ebenfalls ansteigt. Umgekehrt kann durch ein Reduzieren der Zwischenkreisspannung auch die Vorheizspannung herabgesetzt werden. Soll nun ein anderer Lampentyp mit dem Vorschaltgerät betrieben werden, so ist lediglich eine Änderung des Spannungssollwerts für die Zwischenkreisspannung während der Vorheizphase notwendig, ein Austausch des Heiztransformators oder die Verwendung eines anderen Vorschaltgeräts hingegen nicht. Damit eröffnet sich die Möglichkeit, das erfindungsgemäße Vorschaltgerät universell für eine Reihe unterschiedlicher Lampentypen zu verwenden. Der Sollwert für die Zwischenkreisspannung während der Vorheizphase ist dabei in der Regel verschieden zu einem entsprechenden Sollwert während des normalen Lampenbetriebs.

Das Regeln der Zwischenkreisspannung auf einen vorgegebenen Sollwert ist bei elektronischen Vorschaltgeräten an sich bereits bekannt. Die Regelung diente jedoch bisher ausschließlich dazu, die Zwischenkreisspannung auf einen allgemein vorgegebenen Sollwert einzustellen. Gemäß der vorliegenden Erfindung wird die Zwischenkreisspannung nun jedoch während der Startphase in Abhängigkeit von dem zu betreibenden Lampentyp auf einen bestimmten Sollwert geregelt, so daß sichergestellt ist, daß den Heizkreisen mit den Lampenelektroden auch tatsächlich die während der Vorheizphase benötigte Leistung zugeführt wird.

Weiterbildungen der Erfindung sind Gegenstand der Unteransprüche.

So erfolgt die Regelung der Zwischenkreisspannung vorzugsweise mit Hilfe eines die Energieaufnahme des Vorschaltgerätes steuernden Schaltelementes, welches von dem Zwischenkreisspannungs-Regler angesteuert wird. Bei dem Schaltelement kann es sich beispielsweise um einen Feldeffekttransistor handeln. Zum Bereitstellen der Zwischenkreisspannung können die gängigen Schaltprinzipien für Glättungsschaltungen verwendet werden. Beispielsweise bietet sich hierfür die Verwendung eines Hochsetzstellers bzw. Aufwärtswandlers an. Das von dem Zwischenkreisspannungs-Regler angesteuerte Schaltelement ist dabei für die Energieaufnahme des Aufwärtswandlers aus dem Netz verantwortlich. In gleicher Weise könnte jedoch auch ein Abwärtswandler oder eine vergleichbare Schaltung verwendet werden.

Darüber hinaus besteht ferner die Möglichkeit, nach der Zündung der Gasentladungslampe in einem Normalbetriebszustand einen Parameter des Lastkreises, der der Ausgangsleistung des Vorschaltgeräts entspricht, zu erfassen und die Zwischenkreisspannung in Abhängigkeit von diesem erfaßten Parameter derart zu regeln, daß in diesem Normalbetriebszustand die Ausgangsleistung des Vorschaltgeräts innerhalb eines bestimmten vorgegebenen Bereichs liegt. Damit ist die Möglichkeit gegeben, in dem Normalbetriebszustand durch eine Regelung der Zwischenkreisspannung die Gasentladungslampe in einem bestimmten Leistungsfenster zu betreiben. Dies wurde bisher dadurch erreicht, daß die Frequenz der an den Lastkreis angelegten und von dem Wechselspannungsgenerator bereitgestellten hochfrequenten Wechselspannung derart geregelt wurde, daß sich die gewünschte Ausgangsleistung ergab. Gemäß der vorteilhaften Weiterbildung des erfindungsgemäßen Vorschaltgerätes kann nunmehr jedoch auf eine aufwendige Frequenzregelung verzichtet werden. Diese Weiterbildung bietet sich daher insbesondere bei solchen Vorschaltgeräten an, bei denen keine Regelung der Lampenhelligkeit vorgesehen ist und die dementsprechend kostengünstig hergestellt werden sollen. Auch hier wird wiederum der Umstand ausgenützt, daß der Lastkreis ein von der Zwischenkreisspannung abhängiges lineares bzw. monotones Verhalten zeigt. Die Leistungsregelung über eine Regelung der Zwischenkreisspannung ist auch insofern von Vorteil, als trotz möglicherweise bestehender Bauteiltoleranzen der Elemente des Vorschaltgeräts gewährleistet werden kann, daß die Lampe auch tatsächlich unter den gewünschten Bedingungen betrieben wird.

Der von dem Zwischenkreisspannungs-Regler erfaßte Parameter ist dabei derart, daß er Auskunft über die aktuell der Gasentladungslampe zugeführte Leistung gibt. Hierbei kann es sich beispielsweise um die Lampenspannung oder den Lampenstrom handeln. Die von dem Zwischenkreisspannungs-Regler erfassten Daten werden dabei vorzugsweise in digitaler Form verarbeitet.

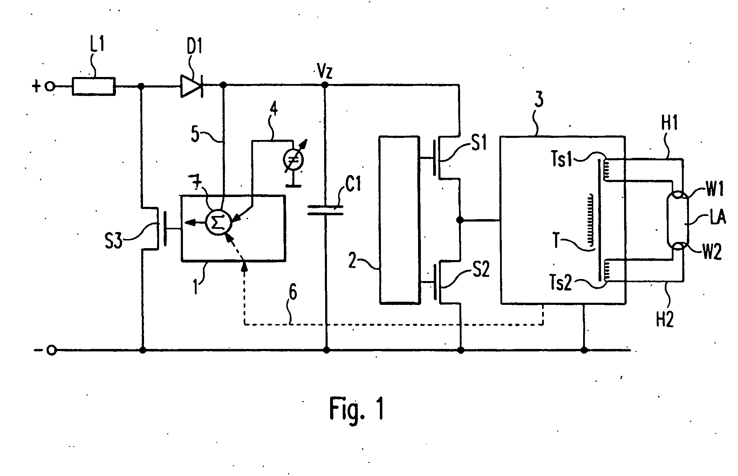

Im folgenden soll die Erfindung anhand der beiliegenden Zeichnungen erläuert werden. Die einzige Figur 1 zeigt dabei eine schematische Darstellung des erfindungsgemäßen elektronischen Vorschaltgeräts.

Dabei wurde in Fig. 1 auf die Darstellung der Gleichrichterschaltung, die üblicherweise durch einen Vollbrückengleichrichter gebildet wird, verzichtet. Die gleichgerichtete Netzspannung wird der Glättungsschaltung zugeführt, die im dargestellten Beispiel durch einen Hochsetzsteller gebildet wird, der aus einer Induktivität L1, einer Diode D1, einem Speicherkondensator C1 und einem von dem Zwischenkreisspannungs-Regler gesteuerten Schaltelement in Form eines Feldeffekttransistors S3 besteht. Die von der Glättungsschaltung bereitgestellte Zwischenkreisspannung Vz wird dem Wechselrichter zugeführt, der aus zwei in einer Halbbrückenschaltung angeordneten Feldeffekttransistoren S1 und S2 besteht. Diese werden von einen Festfrequenzoszillator 2 angesteuert und erzeugen eine hochfrequente Wechselspannung, welche an den Lastkreis 3 mit der Gasentladungslampe LA angelegt wird. Im Normalbetriebszustand, d.h. nach erfolgter Zündung der Lampe LA wird diese somit mit einer Festfrequenz betrieben.

Der Lastkreis enthält den üblichen - nicht dargestellten - Serienresonanzkreis sowie zwei Heizkreise H1 und H2, in denen jeweils eine Lampenwendel W1 bzw. W2 zum Beheizen der Elektroden angeordnet ist. Bestandteil der beiden Heizkreise H1 und H2 ist ferner jeweils eine Sekundärwicklung Ts1 bzw. Ts2 des schematisch dargestellten Heiztransformators T. Während der Vorheizphase vor der Zündung der Gasentladungslampe LA wird ein Heizstrom auf die Sekundärwicklungen Ts1 und Ts2 übertragen, der ein Vorheizen der Lampenelektroden bewirkt.

Die Funktionsweise des Hochsetzstellers ist im Prinzip bereits bekannt und soll daher im folgenden lediglich kurz zusammengefaßt werden. Ist der Feldeffekttransistor S3 leitend, steigt der Strom in der Induktivität L1 linear an. Sperrt hingegen der Feldeffekttransistor S3, entlädt sich der Strom in den Speicherkondensator C1, so daß an diesem eine aus einer Gleichspannung mit Welligkeit bestehende Zwischenkreisspannung Vz entsteht. Durch ein gezieltes Ansteuern des Feldeffekttransistors S3 kann die Energieaufnahme des Aufwärtswandlers und damit auch die an dem Speicherkondensator C1 anliegende Zwischenkreisspannung Vz beeinflußt werden. Dabei besteht die Möglichkeit, die Energieaufnahme durch eine Veränderung der Einschaltzeit oder des Tastverhältnisses des Schalters S3 zu variieren.

Erfindungsgemäß wird während der Vorheizphase der Lampe LA die Zwischenkreisspannung Vz auf einen vorgegebenen Spannungssollwert geregelt, der derart gewählt ist, daß sich infolge dessen in den beiden Heizkreisen H1 und H2 ein für den Lampentyp geeigneter Vorheizstrom oder eine geeignete Vorheizspannung ergibt, der bzw. die ein optimales Vorheizen der Lampenelektroden bewirkt. Die Regelung der Vorheizspannung Vz erfolgt dadurch, daß einer innerhalb des Zwischenkreisspannungs-Reglers 1 angeordneten Steuerschaltung 7 über eine Eingangsleitung 4 ein Sollwert vorgegeben wird, der mit dem über die weitere Eingangsleitung 5 der Steuerschaltung 7 zugeführten aktuellen Wert der Zwischenkreisspannungs Vz als Istwert verglichen wird. Entsprechend dem Vergleichsergebnis erzeugt die Steuerschaltung 7 ein geeignetes Signal zum Ansteuern des Feldeffekttransistors S3, der dann derart gesperrt bzw. durchgeschalten wird, daß sich der gewünschte Wert für die Zwischenkreisspannung Vz ergibt. Dabei ist der Sollwert für die Zwischenkreisspannung Vz während der Vorheizphase in der Regel verschieden zu einem entsprechenden Sollwert während des normalen Lampenbetriebs nach der Zündung.

Wird nun der Lampentyp gewechselt, so ist lediglich erforderlich, daß der der Steuerschaltung 7 zugeführte Sollwert verändert wird. Es ist daher notwendig, daß die Steuerschaltung 7 auf geeignete Weise eine Information erhält, welche Vorheizspannung bzw. Vorheizleistung für den aktuell in dem Lastkreis angeordneten Lampentyp benötigt wird. Hierfür kann beispielsweise der Spannungssollwert intern über ein Pin der Steuerschaltung 7 zugeführt werden. Eine andere Möglichkeit besteht darin, daß das Vorschaltgerät ein externes Pin aufweist, an das ein konstanter Strom angelegt wird. Zur Kennzeichnung, welcher Lampentyp gerade in dem Vorschaltgerät angeordnet ist, ist dann ein den Lampentyp kennzeichnender Widerstand anzuschließen.

Die an diesem Widerstand abfallende Spannung ergibt ein Signal, welches innerhalb des Zwischenkreisspannungs-Reglers 1 in einen geeigneten Sollwert umgesetzt wird. Das erfindungsgemäße Vorschaltgerät kann somit auf einfache Weise dem entsprechenden Lampentyp angepaßt werden, ohne daß hierfür eine aufwendige Frequenzsteuerung des Wechselrichters notwendig wäre.

Wie bereits angedeutet wurde, besteht darüber hinaus die Möglichkeit, nach der Zündung der Lampe LA in einem Normalbetriebszustand die Zwischenkreisspannung Vz derart zu regeln, daß die Lampe LA mit einer gewünschten Leistung betrieben wird. Hierzu wird dem Zwischenkreisspannungs-Regler 1 über eine weitere Eingangsleitung 6 ein dem Lastkreis 3 entnommener Betriebsparameter zugeführt. Dieser Betriebsparameter gibt Auskunft über die der Lampe LA aktuell zugeführte Leistung, wobei es sich beispielsweise um die Lampenspannung oder den Lampenstrom handeln kann. Der Feldeffekttransistor S3 wird dann in dem Normalbetriebszustand von dem Zwischenkreisspannungs-Regler 1 derart angesteuert, daß nicht mehr eine bestimmte vorgegebene Zwischenkreisspannung Vz erzeugt wird, sondern daß die der Lampe LA zugeführte Leistung innerhalb des gewünschen Leistungsfensters liegt. Hierdurch wird durch eine einfache zusätzliche Maßnahme sichergestellt, daß trotz möglicherweise vorhandener Bauteiltoleranzen der einzelnen Elemente des Vorschaltgeräts die Lampe LA mit der gewünschten Leistung betrieben wird.

Das erfindungsgemäße Vorschaltgerät stellt somit ein kostengünstig herzustellendes Gerät dar, welches auf einfache Weise gewährleistet, daß der jeweils eingesetzte Lampentyp unter den gewünschten Bedingungen betrieben wird.

Es ist anzumerken, daß anstelle des in der Zeichnung dargestellten Hochsetzstellers auch andere Glättungsschaltungen verwendet werden können, deren Leistungsaufnahme beeinflußt werden kann. Hierfür bieten sich beispielsweise Tiefsetzsteller oder vergleichbare Schaltungen an. Dabei ist es insbesondere vorteilhaft, wenn die Leistungsaufnahme durch einen Schalter beeinflußt wird, da hierdurch in einfacher Weise die Möglichkeit gegeben ist, die in der Vorheizphase benötigte Heizleistung sowie die in der Betriebsphase erwünschte Lampenleistung auf den jeweiligen Wert einzustellen.

## Patentansprüche

1. Elektronisches Vorschaltgerät für mindestens eine Gasentladungslampe (LA), mit einer an das Wechselstromnetz anschließbaren Gleichrichterschaltung, einer an den Ausgang der Gleichrichterschaltung angeschlossen Glättungsschaltung zum Erzeugen einer Zwischenkreisspannung (Vz), sowie einem mit der Zwischenkreisspannung (Vz) gespeisten Wechselrichter (S1, S2), an dessen Ausgang ein die Lampe (LA) enthaltender Lastkreis (3) angeschlossen ist,
wobei der Lastkreis (3) einen Heiztransformator (T) mit zwei Heizwicklungen (Ts1, Ts2) für die Elektroden der Lampe (LA) aufweist,
**dadurch gekennzeichnet,**
**daß** die Glättungsschaltung einen Zwischenkreisspannungs-Regler (1) aufweist, der in einer Vorheizphase die Zwischenkreisspannung (Vz) auf einen vorgegebenen Spannungssollwert regelt, der dem in dem Lastkreis (3) angeordneten Lampentyp entspricht.

2. Elektronisches Vorschaltgerät nach Anspruch 1,
**dadurch gekennzeichnet,**
**daß** die Glättungsschaltung ein die Energieaufnahme des Vorschaltgeräts steuerndes Schaltelement (S3) aufweist, welches von dem Zwischenkreisspannungs-Regler (1) angesteuert wird.

3. Elektronisches Vorschaltgerät nach Anspruch 2,
**dadurch gekennzeichnet,**
**daß** das Schaltelement ein Feldeffekttransistor (S3) ist.

4. Elektronisches Vorschaltgerät nach einem der vorherigen Ansprüche,
**dadurch gekennzeichnet,**
**daß** die Glättungsschaltung ein Hochsetzsteller ist.

5. Elektronisches Vorschaltgerät nach einem der vorherigen Ansprüche,
**dadurch gekennzeichnet,**
**daß** es ein externes Pin aufweist, an das ein Widerstand anschließbar ist, der den in dem Lastkreis (3) angeordneten Lampentyp kennzeichnet.

6. Elektronisches Vorschaltgerät nach einem der vorherigen Ansprüche,
**dadurch gekennzeichnet,**
**daß** in einem Normalbetriebszustand der Zwischenkreisspannungs-Regler (1) einen Parameter des Lastkreises (3), der der Ausgangsleistung des Vorschaltgeräts entspricht, erfaßt und die Zwischenkreisspannung (Vz) in Abhängigkeit von dem erfaßten Parameter derart regelt, daß die Ausgangsleistung des Vorschaltgeräts innerhalb eines vorgegebenen Bereichs liegt.

7. Elektronisches Vorschaltgerät nach Anspruch 6,
**dadurch gekennzeichnet,**
**daß** der von dem Zwischenkreisspannungs-Regler (1) erfaßte Parameter die Lampenspannung ist.

8. Elektronisches Vorschaltgerät nach Anspruch 6,
**dadurch gekennzeichnet,**
**daß** der von dem Zwischenkreisspannungs-Regler (1) erfaßte Parameter der Lampenstrom ist.

9. Elektronisches Vorschaltgerät nach einem der vorherigen Ansprüche,
**dadurch gekennzeichnet,**
**daß** die Frequenz einer von dem Wechselrichter (S1, S2) erzeugten und an den Lastkreis (3) mit der Lampe (LA) angelegten Wechselspannung in dem Normalbetriebszustand fest ist.

## Claims

1. Electronic ballast for at least one gas discharge lamp (LA), having a rectifier circuit connectable to the a.c. current mains, a smoothing circuit, connected to the output of the rectifier circuit for regenerating an intermediate circuit voltage (Vz), and an inverter (S1, S2) fed with the intermediate circuit voltage (Vz), to the output of which there is connected a load circuit (3) containing the lamp (LA),
the load circuit (3) having a heating transformer (T) with two heating coils (Ts1, Ts2) for the electrodes of the lamp (LA),
**characterised in that**,
the smoothing circuit has an intermediate circuit voltage regulator (1) which in a preheating phase regulates the intermediate circuit voltage (Vz) to a predetermined voltage desired value which corresponds to the lamp type arranged in the load circuit (3).

2. Electronic ballast according to claim 1,
**characterised in that**,
the smoothing circuit has a switch element (S3) controlling the energy take-up of the ballast, which switch element is controlled by the intermediate circuit voltage regulator (1).

3. Electronic ballast according to claim 2,
**characterised in that**,
the switch element is a field effect transistor (S3).

4. Electronic ballast according to any preceding claim,
**characterised in that**,
the smoothing circuit is a boost converter.

5. Electronic ballast according to any preceding claim,
**characterised in that**,
it has an external pin to which a resistance can be connected which characterises the lamp type arranged in the load circuit (3).

6. Electronic ballast according to any preceding claim,
**characterised in that**,
in a normal operating condition the intermediate circuit voltage regulator (1) detects a parameter of the load circuit (3) which corresponds to the output power of the ballast, and so regulates the intermediate circuit voltage (Vz), in dependence upon the detected parameter, that the output power of the ballast lies within a predetermined range.

7. Electronic ballast according to claim 6,
**characterised in that**,
the parameter detected by the intermediate circuit voltage regulator (1) is the lamp voltage.

8. Electronic ballast according to claim 6,
**characterised in that**,
the parameter detected by the intermediate circuit voltage regulator (1) is the lamp current.

9. Electronic ballast according to any preceding claim,
**characterised in that**,
the frequency of an a.c. voltage generated by the inverter (S1, S2) and applied to the load circuit (3) having the lamp (LA) is fixed in the normal operating condition.

## Revendications

1. Ballast électronique pour au moins une lampe à décharge (LA), comportant un circuit redresseur pouvant être raccordé au réseau d'alimentation en courant alternatif, un circuit de lissage raccordé à la sortie du circuit redresseur en vue de générer une tension de circuit intermédiaire (Vz), ainsi qu'un onduleur (S1, S2) qui est alimenté avec la tension de circuit intermédiaire (Vz) et dont la sortie est raccordée à un circuit de charge (3) contenant la lampe (LA),
le circuit de charge (3) comprenant un transformateur de chauffage (T) comportant deux enroulements de chauffage (Ts1, Ts2) pour les électrodes de la lampe (LA),
**caractérisé en ce que** le circuit de lissage comporte un régulateur de tension de circuit intermédiaire (1) qui régule, en phase de préchauffage, la tension de circuit intermédiaire (Vz) à une valeur de tension de consigne prédéterminée qui correspond au type de lampe placé dans le circuit de charge (3).

2. Ballast électronique selon la revendication 1, **caractérisé en ce que** le circuit de lissage comporte un élément de commutation (S3) qui commande l'absorption d'énergie du ballast et qui est commandé par le régulateur de tension de circuit intermédiaire (1).

3. Ballast électronique selon la revendication 2, **caractérisé en ce que** l'élément de commutation est un transistor à effet de champ (S3).

4. Ballast électronique selon l'une des revendications précédentes, **caractérisé en ce que** le circuit de lissage est un survolteur.

5. Ballast électronique selon l'une des revendications précédentes, **caractérisé en ce qu'**il comporte une broche extérieure à laquelle peut être raccordée une résistance qui caractérise le type de lampe placé dans le circuit de charge (3).

6. Ballast électronique selon l'une des revendications précédentes, **caractérisé en ce que** le régulateur de tension de circuit intermédiaire (1) détecte dans le mode de fonctionnement normal un paramètre du circuit de charge (3) qui correspond à la puissance de sortie du ballast et qui régule la tension de circuit intermédiaire (Vz) en fonction du paramètre détecté de sorte que la puissance de sortie du ballast se trouve dans une plage prédéterminée.

7. Ballast électronique selon la revendication 6, **caractérisé en ce que** le paramètre détecté par le régulateur de tension de circuit intermédiaire (1) est la tension de la lampe.

8. Ballast électronique selon la revendication 6, **caractérisé en ce que** le paramètre détecté par le régulateur de tension de circuit intermédiaire (1) est le courant de la lampe.

9. Ballast électronique selon l'une des revendications précédentes, **caractérisé en ce que** la fréquence d'une tension alternative, générée par l'onduleur (S1, S2) et appliquée au circuit de charge (3) comportant la lampe (LA), est fixe dans le mode de fonctionnement normal.
